Europäisches Patentamt

European Patent Office

Office européen des brevets

(19)

(11) Veröffentlichungsnummer : **0 142 705**
**B1**

(12) **EUROPÄISCHE PATENTSCHRIFT**

(45) Veröffentlichungstag der Patentschrift :
08.07.87

(51) Int. Cl.⁴ : **F 16 F   9/38**, B 05 C 21/00

(21) Anmeldenummer : **84112398.7**

(22) Anmeldetag : **13.10.84**

(54) **Schutzhülle für die Kolbenstange eines teleskopierbaren Federelements.**

(30) Priorität : **26.10.83 DE 3338801**

(43) Veröffentlichungstag der Anmeldung :
**29.05.85 Patentblatt 85/22**

(45) Bekanntmachung des Hinweises auf die Patenterteilung : **08.07.87 Patentblatt 87/28**

(84) Benannte Vertragsstaaten :
**DE FR GB IT SE**

(56) Entgegenhaltungen :
**EP-A- 0 083 443**
**CH-A-   376 247**
**DE-A- 1 902 019**
**DE-A- 2 643 845**
**DE-U- 7 922 720**
**FR-A- 2 448 393**
**US-A- 3 130 078**
**US-A- 3 850 141**
**US-A- 4 167 992**

(73) Patentinhaber : **BAYERISCHE MOTOREN WERKE**
**Aktiengesellschaft**
**Postfach 40 02 40 Petueiring 130 - AJ-36**
**D-8000 München 40 (DE)**

(72) Erfinder : **Steinberg, Klaus**
**Birkenstrasse 17**
**D-8054 Mauern (DE)**

(74) Vertreter : **Dexheimer, Rolf**
**Bayerische Motoren Werke Aktiengesellschaft Post-**
**fach 40 02 40 Petuelring 130 - AJ-21**
**D-8000 München 40 (DE)**

**Beschreibung**

Die Erfindung bezieht sich auf eine Schutzhülle der im Oberbegriff des Patentanspruchs 1 genannten Art, welche aus der DE-A-1 902 019 hervorgeht.

Die bekannte Schutzhülle überdeckt den aus einem teleskopierbaren Federelement herausragenden Bereich der Kolbenstange und dient sowohl dazu, diese im Betriebseinsatz des Federelements vor mechanischen Beschädigungen als auch beim Lackieren des Fahrzeugs bzw. von Fahrzeugteilen vor Farbbenetzung zu schützen. In letztgenanntem Falle braucht das Federelement bei Lackierarbeiten nicht ausgebaut zu werden. Da jedoch bei der Trocknung von lackierten Teilen im Kraftfahrzeugbau sehr hohe Temperaturen, nämlich bis zu etwa 180 °C entstehen, muß die Schutzhülle aus einem diesen hohen Temperaturen widerstehenden polymerischen Material bestehen. Ein solches Material ist zwar für die bekannte Schutzhülle vorgesehen. Da sich diese jedoch aus zwei Teilen, nämlich einem Schutzrohr und einem Schutzrohrträger, zusammensetzt, ist sie nicht nur kompliziert und mittels teurer Werkzeuge zu fertigen, sondern im Verhältnis zu dem beim Lackiervorgang erlangten Nutzeffekt auch viel zu zeitraubend zu montieren und vor allem zu demontieren.

Ferner ist in der FR-A-2 448 393 eine Schutzhülle aus polymerischem Werkstoff offenbart, welche zum Überdecken des Fensterrahmens einer Fahrzeugtüre bei deren Lackierung dient. Dabei besteht die Schutzhülle im Herstellzustand aus einem dünnen, streifenartigen Band, das unter Bildung einer Überlappung auf dem Fensterrahmen aufgeklebt wird. In das Band ist dabei ein längs der Führungsnut des Fensterrahmens verlaufender Draht eingebettet. Dieser wird nach Lackierung der Fahrzeugtüre zum Entfernen der Schutzhülle vom Fensterrahmen längs dessen Längserstreckung gerissen, wodurch die Schutzhülle längsgeteilt ist und dadurch von letzterem entfernt werden kann. Sowohl das Aufkleben der Schutzhülle auf den Fensterrahmen als auch ihre Entfernung von diesem ist für eine im Automobilbau übliche Großserienfertigung sehr zeitaufwendig und damit teuer. Ferner kann sich die Bandüberlappung der auf ein Bauteil aufgeklebten Schutzhülle bei Lackierungsvorbehandlungen des Bauteils in einem Tauchbad — wie bei Vorbehandlungen zum Lackieren eines Personenkraftwagens üblich — durch die Flüssigkeitseinwirkung auflösen, wodurch sich die Schutzhülle insgesamt vom Bauteil ablösen kann. Die bekannte Schutzhülle ist somit nicht geeignet zum Überdecken eines solchen Bauteils, bei dem ein an dieses angrenzendes anderes Bauteil vor dessen Lackierung in einem Tauchbad behandelt werden muß.

Schließlich ist die aus der US-A-3 850 141 hervorgehende Schutzhülle als ein dünnwandiges Kunststoffrohr ausgebildet, das zum Abdecken des Zylindermantels eines Einstellelements sowie der sich an dessen beiden Endbereichen befindenden axialen Fortsätzen dient. Dabei ist die Schutzhülle an einer Stirnseite offen und liegt dort lediglich über einen Quersteg an der Stirnseite eines Fortsatzes an, während die Schutzhülle an ihrem gegenüberliegenden Endabschnitt von einer Schnur oder dergleichen umschlungen ist, durch die sie radial zusammengezogen und auf einen axialen Fortsatz festgelegt ist. Die bekannte Schutzhülle soll dabei den Zylindermantel und einen axialen Fortsatz des sich an einer Fahrzeugunterseite befindenden Einstellelements beim Sandstrahlen der Fahrzeugunterseite oder beim Auftragen von Farbe auf diese vor Farbspritzern bzw. Sandkörnern schützen. Da jedoch eine Stirnseite der Schutzhülle offen ist, können von dort Farbspritzer, Sandkörner oder dergleichen zumindest auf den axialen Fortsatz gelangen. Auch muß zum Entfernen der Schutzhülle vom Einstellelement die Verknotung der Schnur in zeitraubender Weise gelöst werden.

Aufgabe der Erfindung ist es daher, eine Schutzhülle der im Oberbegriff des Patentanspruchs 1 genannten Art derart auszubilden, daß sie nach Lackierung des das teleskopierbare Federelement tragenden Teils rasch und unkompliziert entfernt werden kann.

Zur Lösung der Aufgabe sind die im Patentanspruch 1 dargelegten Merkmale vorgesehen.

Nachdem die Schutzhülle erfindungsgemäß mindestens eine längsverlaufende Sollreißstelle — welche durch eine Querschnittsverringerung der Wanddicke der Schutzhülle gebildet wird — und einen radial abstehenden Reißfortsatz aufweist, kann die Schutzhülle über letzteren nach der Lackierung des das teleskopierbare Federelement tragenden Teils durchgetrennt und damit rasch vom Federelement entfernt werden.

Am einfachsten läßt sich natürlich die Schutzhülle durchtrennen, wenn mindestens eine längsverlaufende Sollreißstelle im Bereich des Reißfortsatzes vorgesehen ist, da dieser hierbei mit relativ geringem Kraftaufwand lediglich radial nach außen und/oder längs des Federelements gerissen zu werden braucht (Merkmale des Patentanspruchs 2).

Durch eine im Bereich des Befestigungsauges der Kolbenstange des Federelements vorgesehene Dichtscheibe, die den gleichen Außendurchmesser wie dessen Zylindermantel hat, kann die Schutzhülle vorteilhafterweise über die gesamte Längserstreckung mit gleichbleibendem Querschnittsprofil und damit rationell im Extrudierverfahren als Meterware hergestellt werden (Merkmale der Patentansprüche 3 und 4). Dabei kann auch die lichte Weite der Schutzhülle derart bemessen werden, daß diese den Zylindermantel des Federelements und die Dichtscheibe flüssigkeitsdicht umschließt. Es ist denkbar, die Schutzhülle mittels einer speziellen, in den Patentansprüchen 5 und 6 dargelegten Vorrichtung auf den Zylindermantel des Federelements zu schieben. Bei Einleitung von Druckluft in den Hohlraum des Einführtrichters und deren Ausblasung über dessen kleinen Durchmesser wird die gummielastische Schutzhülle radial etwas aufgeweitet, so daß der Zylindermantel des Federelements in die Schutzhülle einführbar ist und sich diese nach Unterbrechung der Druckluftzufuhr radial zusammenzieht und damit auf dem Zylindermantel und der Dichtscheibe festliegt. Anschließend kann die üblicherweise endlos verlaufende Meterware der Schutzhülle am freien Ende des Federelements in dessen ausgefedertem Zustand abgetrennt werden.

Ein Ausführungsbeispiel der Erfindung ist in der Zeichnung dargestellt und wird im folgenden erläutert. Es zeigt :

Figur 1 eine perspektivische Gesamtansicht eines Gasdruckzylinders mit einer diesen umgebenden Schutzhülle, deren Reißfortsatz teilweise abgetrennt ist,

Figur 2 einen Schnitt längs der Linie II-II in Fig. 1 in größerer Darstellung,

Figur 3 eine Vorrichtung zum Aufschieben der Schutzhülle auf einen Gasdruckzylinder mittels Druckluft.

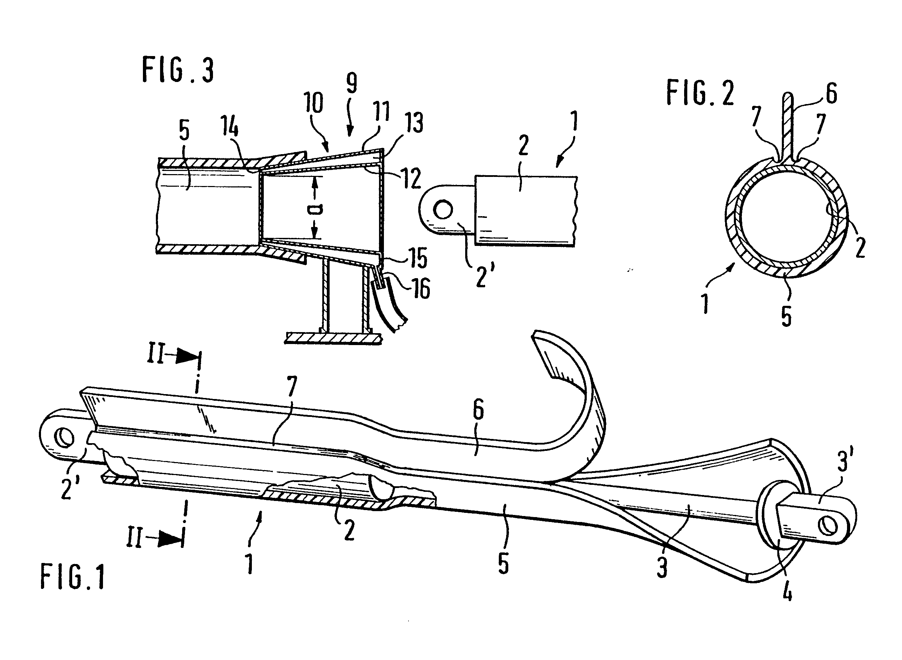

Der in Fig. 1 dargestellte Gasdruckzylinder 1 dient in vorliegendem Ausführungsbeispiel zum Verschwenken einer klappbaren Haube an einem Personenkraftwagen und besteht im wesentlichen aus einem Zylindermantel 2 und einer Kolbenstange 3, wobei an den freien Endabschnitten von Zylindermantel 2 und Kolbenstange 3 ein Befestigungsauge 2' bzw. 3' vorgesehen ist. An letzterem liegt dabei eine die Kolbenstange 3 umgebende Dichtscheibe 4 an, die den gleichen Außendurchmesser wie der Zylindermantel 2 hat. Um die Kolbenstange 3 beim Lackieren des Personenkraftwagens — wobei der Gasdruckzylinder 1 eingebaut ist — vor Farbbenetzung zu schützen, ist der Gasdruckzylinder 1 von einer aus Moosgummi bestehenden Schutzhülle 5 umgeben, wobei der Moosgummi mindestens gegen etwa 180 °C hitzebeständig sowie gegen die bei Vorbehandlungen zum Lackieren des Personenkraftwagens verwendeten Tauchbäder resistent ist. Die Schutzhülle 5 wird zweckmäßigerweise im Extrudierverfahren als Meterware hergestellt und hat somit über ihre gesamte Längserstreckung ein gleichbleibendes Querschnittsprofil. Dabei wird von der Meterware ein Abschnitt mit einer solchen Erstreckung abgelängt, daß sich die Schutzhülle 5 in vollständig ausgefedertem Zustand des Gasdruckzylinders 1 vom freien, rückseitigen Ende des Zylindermantels 2 bis etwas über die Dichtscheibe 4 hinaus erstreckt. Diese wird hierbei ebenso wie der Zylindermantel 2 von der Schutzhülle 5 mit Eigenspannung flüssigkeitsdicht umschlossen.

Damit die Schutzhülle 5 nach erfolgter Lackierung des Personenkraftwagens oder eines Fahrzeugteils rasch und unkompliziert vom Gasdruckzylinder 1 entfernt werden kann, ist sie mit einem über ihre gesamte Längserstreckung verlaufenden, radial abstehenden Reißfortsatz 6 versehen. Dieser hat an seinen beiden, am Außenumfang der Schutzhülle 5 liegenden Grundkanten jeweils eine axial verlaufende Querschnittsverringerung 7, die jeweils durch eine vom Außenumfang zurückgesetzte Längsnut gebildet ist (Fig. 2) und sich über die gesamte Länge der Schutzhülle 5, also zwischen deren freien Enden, erstreckt. Durch die beiden vorgesehenen Querschnittsverringerungen 7 wird zum Entfernen der Schutzhülle 5 vom Gasdruckzylinder 1 lediglich der Reißfortsatz 6 mit sehr geringem Kraftaufwand radial nach außen und/oder längs des Gasdruckzylinders 1 gerissen, wobei — wie in Fig. 1 im Bereich des freien Endes der Kolbenstange 3 ersichtlich — die Schutzhülle 5 längsgeteilt wird und dadurch vom Gasdruckzylinder 1 nur abgezogen zu werden braucht.

Die Schutzhülle 5 wird zweckmäßigerweise unter Verwendung eines pastösen Gleitmittels auf den Zylindermantel 2 und die Dichtscheibe 4 geschoben. Es ist jedoch auch denkbar, hierfür die in Fig. 3 dargestellte Vorrichtung 9 vorzusehen. Diese weist einen ortsfest angeordneten, kegelstumpfförmigen Einführtrichter 10 auf, der mit einem Außenmantel 11 und einem in radialem Abstand vorgesehenen Innenmantel 12 versehen ist, so daß ein radialer Hohlraum 13 gebildet ist. Dabei sind an der Stirnseite des kleinen Durchmessers 14 umlaufend oder abschnittsweise verlaufende Öffnungen vorgesehen, während die beim großen Durchmesser 15 liegende Stirnseite des Einführtrichters 10 umlaufend geschlossen ist. Der kleine Durchmesser 14 einerseits und der Neigungswinkel zwischen diesem und dem großen Durchmesser 15 andererseits sind so bemessen, daß die Schutzhülle 5 (als Meterware) über einen Abschnitt von etwa 10-20 mm auf den Außenmantel 11 aufschiebbar ist. Ferner ist die lichte Weite a des Einführtrichters 10 beim kleinen Durchmesser 14 geringfügig größer als der Außendurchmesser des Zylindermantels 2 des Gasdruckzylinders 1. Schließlich ist im Bereich des großen Durchmessers 15 mindestens ein radial wegragender Drucklufteinlaß 16 vorgesehen ; es ist jedoch auch denkbar, hierfür eine Ringdüse anzuordnen. Wie erwähnt, wird zum Ineinanderschieben von Gasdruckzylinder 1 und Schutzhülle 5 diese als Meterware an ihrem freien Endabschnitt über den Außenmantel 11 des Einführtrichters 10 geschoben und sodann über den Drucklufteinlaß 16 Druckluft in den Einführtrichter 10 eingeleitet. Diese wird schließlich an der Stirnseite des kleinen Durchmessers 14 ausgeblasen und dadurch die Schutzhülle 5 über den größten Teil ihrer Längserstreckung radial aufgeweitet (wie in Fig. 3 dargestellt), so daß der Zylindermantel 2 des Gasdruckzylinders 1 bis zur Dichtscheibe 4 in die Schutzhülle 5 einschiebbar ist. Nach Unterbrechung der Druckluftzufuhr zieht sich die Schutzhülle 5 durch Eigenspannung radial wieder zusammen und liegt damit auf dem Zylindermantel 2 und der Dichtscheibe 4 fest. Anschließend wird die — bislang in endloser Meterware verlaufende — Schutzhülle 5 vom Einführtrichter 10 gezogen und im Bereich des

freien Endes des Zylindermantels 2 durchgetrennt.

Nach einem nicht dargestellten Ausführungsbeispiel kann der Einführtrichter 10 auch längsgeteilt ausgebildet sein, wobei die beiden Trichterhälften zweckmäßigerweise nahe dem kleinen Durchmesser 14 aneinandergelenkt sind und natürlich jeweils mindestens einen Drucklufteinlaß 16 aufweisen. Ein derartiger Einführtrichter 10 läßt sich manuell vorteilhaft handhaben.

Durch den für die Schutzhülle 5 vorgesehenen Moosgummi ist auch gewährleistet, daß die Kolbenstange 3 im Zylindermantel 2 des Gasdruckzylinders 1 längs verschoben werden kann, wobei Längenveränderungen größtenteils von der Schutzhülle 5 unter Bildung von Falten oder dergleichen aufgenommen werden.

## Patentansprüche

1. Schutzhülle für die Kolbenstange eines teleskopierbaren Federelements, wobei die Schutzhülle aus polymerischem Werkstoff besteht und als ein umlaufend geschlossenes Rohr ausgebildet ist sowie einerseits den Zylindermantel des Federelements zumindest an seinem kolbenstangenseitigen Endabschnitt umgibt und andererseits den freien Endabschnitt der Kolbenstange dicht umschließt, dadurch gekennzeichnet, daß die Schutzhülle (5) wenigstens eine längsverlaufende Sollreißstelle (Querschnittsverringerung 7) sowie ferner einen über mindestens einen Teilabschnitt ihrer Längserstreckung verlaufenden, radial abstehenden Reißfortsatz (6) aufweist.

2. Schutzhülle nach Anspruch 1, dadurch gekennzeichnet, daß wenigstens eine längsverlaufende Sollreißstelle (Querschnittsverringerung 7) im Bereich des Reißfortsatzes (6) vorgesehen ist.

3. Schutzhülle nach Anspruch 1, wobei die Kolbenstange eine an ihrem Befestigungsauge liegende Dichtscheibe trägt, welche einen gleich großen Außendurchmesser wie der Zylindermantel des Federelements aufweist und von einem Endabschnitt der hochhitzebeständigen Schutzhülle dicht umgeben ist, dadurch gekennzeichnet, daß die Schutzhülle (5) ein über ihre gesamte Längserstreckung gleichbleibendes Querschnittsprofil hat und aus gummielastischem Material besteht, wobei die Dichtscheibe (4) und der Zylindermantel (2) des Federelements (1) von der Schutzhülle mit Eigenspannung flüssigkeitsdicht umschlossen werden.

4. Schutzhülle nach Anspruch 3, dadurch gekennzeichnet, daß die im Extrudierverfahren als Meterware hergestellte Schutzhülle (5) aus Moosgummi besteht.

5. Vorrichtung zum Aufschieben der Schutzhülle nach einem der Ansprüche 1 bis 4 auf den Zylindermantel des Federelements, gekennzeichnet durch einen einen radialen Hohlraum (13) aufweisenden, kegelstumpfförmigen Einführtrichter (10), auf dessen kleinen, stirnseitig offenen Durchmesser (14) die Schutzhülle (5) außen über einen Abschnitt aufschiebbar ist, wobei die lichte Weite (a) des Einführtrichters am kleinen Durchmesser etwas größer ist als der Außendurchmesser des Zylindermantels (2) des Federelements (1), während die sich am großen Durchmesser (15) des Einführtrichters befindende Stirnseite umlaufend geschlossen ist und sich in deren Bereich wenigstens ein radial wegragender Drucklufteinlaß (16) befindet.

6. Vorrichtung nach Anspruch 5, dadurch gekennzeichnet, daß der Einführtrichter (10) längsgeteilt ausgebildet ist, wobei die beiden Trichterhälften nahe dem kleinen Durchmesser (14) des Einführtrichters aneinandergelenkt sind und jeweils einen Drucklufteinlaß (16) aufweisen.

## Claims

1. A protective envelope or sleeve for the piston rod of a telescopic spring element, wherein the protective envelope is made of polymer material and is formed as a closed surrounding tube so that, on the one hand, it surrounds the cylinder jacket of the spring element, at least at its piston rod end section, and, on the other hand, tightly encloses the free end section of the piston rod, characterised in that the protective envelope (5) comprises at least one longitudinally-extending preset tearing part (portion 7 of reduced cross-section) and also a radially-protruding tear-off extension (6) extending over at least a part of its length.

2. A protective envelope according to Claim 1, characterised in that at least one longitudinally-extending preset tearing part (portion 7 of reduced cross-section) is provided in the region of the tear-off extension (6).

3. A protective envelope according to Claim 1, wherein the piston rod carries a sealing washer lying against its fastening eye, which washer has an external diameter of the same size as the cylinder jacket of the spring element and is tightly surrounded by an end section of the highly-refractory protective envelope, characterised in that the protective envelope (5) has a constant profile in cross-section over its entire length and is made of rubber-elastic material, while the sealing washer (4) and the cylinder jacket (2) of the spring element (1) are fluid-tightly enclosed by the protective envelope with inherent tension.

4. A protective envelope according to Claim 3, characterised in that the protective envelope (5), produced as piece goods by an extrusion method, is made of foam rubber.

5. A device for pushing the protective envelope as claimed in any one of Claims 1 to 4 on to the cylinder jacket of the spring element, characterised by a frusto-conical introduction funnel (10) having a radial cavity (13), on to the small, terminally-open diameter (14) of which funnel the protective envelope is externally pushable over a section of the funnel, the clear internal width (a) of the introduction funnel at the small diameter being somewhat greater than the external diameter of the cylinder jacket (2) of the spring element (1), while the end situated at the large diameter (15) of the introduction funnel is closed all round and, in the region thereof, at least one compressed-air inlet (16), extending away radially, is situated.

6. A device according to Claim 5, characterised in that the introduction funnel (10) is of longitudinally divided formation, the two funnel halves being articulated to one another close to the small diameter (14) of the introduction funnel and each having a compressed-air inlet (16).

**Revendications**

1. Gaine de protection pour la tige de piston d'un élément de suspension télescopique, cette gaine de protection étant constituée d'un matériau polymérisé, et revêtant la forme d'un tube fermé sur sa périphérie qui entoure, de façon étanche, d'une part, l'enveloppe cylindrique de l'élément de suspension, tout au moins à son extrémité côté tige de piston, et, d'autre part, l'extrémité libre de la tige de piston, gaine de protection caractérisée en ce que cette gaine (5) comporte au moins un emplacement de déchirure (réduction de section transversale 7) s'étendant longitudinalement, ainsi qu'en outre, un appendice de déchirure (6) faisant saillie radialement et s'étendant au moins sur une partie de l'extension longitudinale de la gaine.

2. Gaine de protection selon la revendication 1, caractérisée en ce qu'il est prévu au moins un emplacement de déchirure s'étendant longitudinalement (réduction de section transversale 7) au voisinage de l'appendice de déchirure (6).

3. Gaine de protection selon la revendication 1, la tige de piston portant un disque d'étanchement placé contre son œilleton de fixation, ce disque ayant un diamètre externe égal à celui de l'enveloppe cylindrique de l'élément de suspension, et étant entouré par une partie d'extrémité de la gaine de protection résistant à une chaleur élevée, gaine de protection caractérisée en ce que cette gaine (5) a un profil de section transversale restant le même sur toute son extension longitudinale, et est constituée d'un matériau présentant l'élasticité du caoutchouc, le disque d'étanchement (4) et l'enveloppe cylindrique (2) de l'élément de suspension (1) étant entourés de façon étanche au liquide par la gaine de protection s'appliquant sous sa propre contrainte.

4. Gaine de protection selon la revendication 3, caractérisée en ce que la gaine de protection (5), fabriquée sous la forme de marchandise au mètre selon un procédé d'extrusion, est constituée de caoutchouc mousse.

5. Dispositif pour enfiler la gaine de protection selon une des revendications 1 à 4, sur l'enveloppe cylindrique de l'élément de suspension, dispositif caractérisé en ce qu'il comporte un entonnoir d'introduction (10) en forme de tronc de cône, et comportant un espace creux radial (13), la gaine de protection (5) étant susceptible d'être enfilée extérieurement le long d'une certaine distance sur la partie de petit diamètre, ouverte frontalement, de cet entonnoir d'introduction, le diamètre interne (a) de l'entonnoir d'introduction au voisinage du petit diamètre, étant un peu supérieur au diamètre externe de l'enveloppe cylindrique (2) de l'élément de suspension (1), tandis que la face frontale de grand diamètre (15) de l'entonnoir d'introduction est fermée périphériquement, et qu'à son voisinage, se trouve moins une admission d'air comprimé (16) faisant saillie radialement.

6. Dispositif selon la revendication 5, caractérisé en ce que l'entonnoir d'introduction (10) est divisé longitudinalement, les deux moitiés de cet entonnoir étant articulées l'une sur l'autre au voisinage du petit diamètre (14) de l'entonnoir d'introduction et comportant chacune une admission d'air comprimé (16).

FIG.3

FIG.2

FIG.1

0 142 705